(19) **Europäisches Patentamt**

**European Patent Office**

**Office européen des brevets**

(11) **EP 0 535 332 B1**

(12) **EUROPÄISCHE PATENTSCHRIFT**

(45) Veröffentlichungstag und Bekanntmachung des Hinweises auf die Patenterteilung:
**25.10.2000 Patentblatt 2000/43**

(51) Int. Cl.$^7$: **F25D 11/02**, F25D 29/00

(21) Anmeldenummer: **92113434.2**

(22) Anmeldetag: **06.08.1992**

(54) **Kühlgerät, insbesondere Mehrtemperaturen-Kühlschrank**

Refrigeration apparatus, especially multi-temperature refrigerator

Appareil frigorifique, en particulier réfrigérateur à plusieurs températures

(84) Benannte Vertragsstaaten:
**AT CH DE ES FR GB IT LI NL SE**

(30) Priorität: **01.10.1991 DE 4132719**

(43) Veröffentlichungstag der Anmeldung:
**07.04.1993 Patentblatt 1993/14**

(73) Patentinhaber:
**BSH Bosch und Siemens Hausgeräte GmbH
81669 München (DE)**

(72) Erfinder:
- **Holz, Walter, Dipl.-Ing.
  W-7928 Giengen (DE)**
- **Arnold, Friedrich, Dipl.-Ing.
  W-7080 Aalen-Ebnat (DE)**
- **Lipp, Walter
  W-8881 Haunsheim (DE)**

(56) Entgegenhaltungen:
**US-A- 3 206 941      US-A- 4 094 166
US-A- 4 860 552**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Kühlgerät, insbesondere einen Mehrtemperaturen-Kühlschrank, mit einer Einkreis-Kältemaschine, deren hintereinander geschaltete Verdampfer einem Gefrierfach und wenigstens einem Kühlfach mit einem temperaturabhängig die Luft im Kühlfach umwälzendem Ventilator zugeordnet sind, und deren Regler die Kältemaschine in Abhängigkeit von der Verdampfertemperatur im Kühlfach periodisch derart steuert, daß vor jedem Wiederanlauf der Kältemaschine ein Abtauen des Verdampfers im Kühlfach erfolgt, wobei der Regler zusätzlich mit einem die Lufttemperatur im Kühlfach erfassenden Fühler ausgestattet ist, mit dessen Hilfe er beim Erreichen des unteren Schaltpunktes im Kühlfach die Kältemaschine abschaltet.

Bei Kühlgeräten der vorstehend beschriebenen Gattung ist es üblich, sog. „Konstant-Ein-Regler" einzusetzen, deren Fühler die Temperatur des Verdampfers im Kühlfach erfaßt und deren ein automatisches Abtauen dieses Verdampfers gestattender oberer Schaltpunkt bei einer konstanten Temperatur über dem Gefrierpunkt liegt.

Derartige Konstant-Ein-Regler haben sich wegen ihres einfachen Aufbaus und ihrer bei normaler Raumtemperatur sehr zuverlässigen Funktion bewährt und daher ganz allgemein bei Kühlgeräten der genannten Art verbreitet Anwendung gefunden. Sie haben jedoch den Nachteil, daß sich ihr Regelverhalten schon bei jahreszeitlich bedingten, geringen Abweichungen der Raumtemperatur am Aufstellungsort des Gerätes erheblich ändert. So besteht bei niedrigen Raumtemperaturen - aufgrund des dann geringeren Wärmeeinfalls in das wärmeisolierte Kühlfach des Gerätes und der damit hervorgerufenen geringeren Einschalthäufigkeit und Laufdauer des Verdichters seiner Kältemaschine - die Gefahr, daß die Temperatur im Gefrierfach über den zulässigen höchsten Wert ansteigt, so daß im Gefrierfach gelagertes Gut geschädigt werden kann und verdirbt.

Weniger nachteilig wirkt sich dagegen ein durch sommerliche Witterungsbedingungen hervorgerufener Anstieg der Raumtemperatur aus, da hierbei wegen des höheren Wärmeeinfalls im Kühlfach und der dadurch bedingten größeren Einschalthäufigkeit und längeren Laufzeit der Kältemaschine die Temperatur im Gefrierfach stärker absinkt; dies hat jedoch keine nachteiligen Folgen für das im Gefrierfach eingelagerte Gut. Allerdings kann es bei häufigem Öffnen der Tür des Kühlgerätes wegen des bei hohen Raumtemperaturen auch meist verhältnismäßig hohen Feuchtigkeitsgehalts der das Gerät umgebenden Raumluft zu starkem Betauen der weit unter den Taupunkt der Luft abgekühlten Teile im Innern des Kühlfaches und des dort eingelagerten Kühlgutes kommen.

Um die sich bei niedriger Raumtemperatur ergebenden Schwierigkeiten zu beheben, hat man bereits vorgeschlagen, die Temperatur im Normalkühlfach durch Gegenheizen zu erhöhen und damit die Einschalthäufigkeit und Einschaltdauer der Kältemaschine zu verlängern. Im Falle nach einer mit dem DBP 943 169 bekannt gewordenen Lösung wird zum Gegenheizen eine als Beleuchtung des Kühlfaches dienende Glühbirne verwendet, deren Heizleistung bei abnehmender Umgebungstemperatur von einem die Außentemperatur am Aufstellungsort des Gerätes erfassenden Schalter umgekehrt proportional gesteuert wird.

Bei einer aus der DE-OS 39 04 216 bekannten weiteren Lösung soll beim Anstieg der Temperatur im Gefrierfach ein dort angeordneter Wärmefühler einen im Kühlfach angebrachten und von einem Mikroprozessor gesteuerten Ventilator einschalten, um die Luft im Kühlfach umzuwälzen und so bei ungünstigen Außentemperaturen die Raumtemperatur im Gefrierfach auf der dort vorgeschriebenen Solltemperatur zu halten.

Während im ersten Falle jedoch der Wirkungsgrad des Kühlgerätes durch Zufuhr von Wärmeenergie im Kühlfach ganz erheblich beeinträchtigt wird, ist im zweiten Falle eine aufwendige elektronische Schaltung notwendig, um den angestrebten Erfolg zu erzielen. Durch den in diesem Falle im Gefrierfach angebrachten Wärmefühler zum Steuern des Ventilatorbetriebes ist die vorgeschlagene Lösung darüber hinaus auch verhältnismäßig reaktionsträge.

Ausgehend von diesem bekannten Stand der Technik liegt der Erfindung die Aufgabe zugrunde, ein Kühlgerät, insbesondere einen Mehrtemperaturen-Kühlschrank mit einer Regelung zu schaffen, die auf einfache Weise eine sichere Anpassung des Regelverhaltens, insbesondere in einem von der Normtemperatur weit nach oben abweichenden Bereich gewährleistet und somit von diesen Temperaturschwankungen unabhängig macht.

Diese Aufgabe wird nach der vorliegenden Erfindung durch Anspruch 1 gelöst, insbesondere dadurch, daß ein auf die direkt durch einen Thermostaten gemessene Umgebungstemperatur des Gerätes reagierender Schalter den Ventilator nur bei über der normalen Raumtemperatur, z. B. 20°C, liegenden Umgebungstemperatur einschaltet.

Mit Hilfe des erfindungsgemäß auf hohe Raumtemperaturen ansprechenden Schalters, der den Ventilator nur bei höheren, über der normalen Raumtemperatur liegenden Temperaturen in Gang setzt, ist es möglich, die damit ausgestatteten Kühlgeräte ohne zusätzliche Maßnahmen auch bei hoher Umgebungstemperatur, also auch unter subtropischen oder sogar tropischen Klimaverhältnissen einsetzen zu können, ohne die andernfalls aufgrund hoher Außentemperaturen auftretenden Abweichungen im Regelverhalten der Geräte in Kauf nehmen zu müssen. Gleichzeitig wird erreicht, daß sich die bei hohen Außentemperaturen vermehrt anfallende Feuchtigkeit mit Hilfe des vom Ventilator erzeugten Luftstromes direkt am Verdampfer des Kühlraumes als Reif niederschlägt, ohne zuvor in nennenswertem Maße die kalten Teile des Kühlraums bzw. des dort eingelagerten, bereits gekühlten Gutes benetzt zu haben.

Nach einer besonders vorteilhaften Ausgestaltung des Gegenstandes der Erfindung ist vorgesehen, daß der Stromkreis des Ventilators nur bei eingeschaltetem Verdichter der Kältemaschine geschlossen werden kann.

Auf diese Weise wird sichergestellt, daß die Temperatur im Kühlraum nicht noch weiter absinken kann, wenn die Kältemaschine beim Erreichen des unteren Abschaltpunktes stillgesetzt ist und durch weitere Luftumwälzung über den dann noch sehr kalten Verdampfer ein Absinken der Temperatur unter den unteren Grenzwert eintreten kann.

Zur genauen Einhaltung der Temperaturgrenzen im Kühlraum kann nach einer vorteilhaften Weiterbildung des Gegenstandes der Erfindung vorgesehen sein, daß der Ventilator zusätzlich mit einem Zeitverzögerungsschalter versehen ist, mit dessen Hilfe seine Laufzeiten gegenüber der Laufperiode der Kältemaschine versetzt sind.

Die Erfindung ist in der nachfolgenden Beschreibung anhand eines in der beigefügten Zeichnung vereinfacht dargestellten Ausführungsbeispiels eines Mehrtemperaturen-Kühlschranks sowie mehrerer Diagramme, aus denen das Temperaturverhalten in den Fächern des Kühlgerätes bei verschiedenen Raumtemperaturen hervorgeht, erläutert. Es zeigen:

Fig. 1    einen Mehrtemperaturen-Kühlschrank mit einem in dessen Kühlfach angeordneten, in Abhängigkeit von der Außentemperatur gesteuerten Ventilator in schematischer Schnittansicht,

Fig. 2    ein Diagramm, aus dem das Temperaturverhalten in den einzelnen Fächern des Mehrtemperaturen-Kühlschranks bei einer Außentemperatur von+ 16°C hervorgeht und

Fig. 3    ein der Fig. 2 entsprechendes Diagramm, jedoch bei Außentemperaturen von + 32°C.

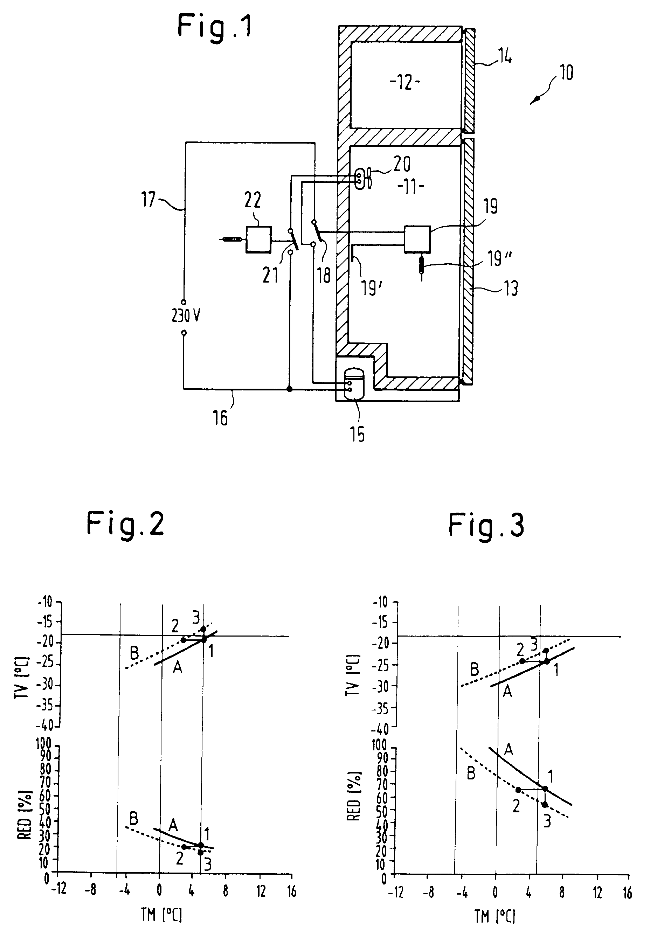

Ein in der Fig. 1 mit 10 bezeichneter Zweitemperaturen-Kühlschrank ist mit einem Normalkühlfach 11 und einem darüberliegenden Tiefkühlfach 12 ausgestattet, die beide mit ihnen zugeordneten Türen 13 bzw. 14 separat verschließbar sind. Am Boden des Zweitemperaturen-Kühlschranks 10 ist in einer im rückwärtigen Bereich aus seinem wärmeisolierten Gehäuse ausgesparten Nische ein gekapselter Verdichter 15 einer Einkreis-Kältemaschine üblicher Bauart angeordnet, deren einzelne Elemente der einfacheren Darstellung wegen nicht abgebildet sind. Der Verdichter 15 ist über Leitungen 16 und 17 an das Netz einer Stromversorgung angeschlossen. In Leitung 17 liegt ein Schalter 18 eines Reglers 19, der sowohl die Lufttemperatur im Innern des Kühlfachs 11 als auch dessen Verdampfertemperatur erfaßt. Der Regler 19 ist zu diesem Zweck mit zwei Temperaturfühlern 19' und 19'' ausgestattet, von denen der mit 19' bezeichnete dem Verdampfer des Kühlfaches 11 zugeordnet ist und das Einschalten des Reglers 19 bewirkt, während der die Lufttemperatur im Normalkühlfach erfassende Temperaturfühler 19'' den Regler abschaltet.

Im Innern des Kühlfachs 11 ist ferner ein Ventilator 20 angeordnet, dessen Antriebsmotor mittels eines Schalters 21 in Abhängigkeit von der Temperatur der das Kühlgerät 10 umgebenden Atmosphäre geschaltet wird.

Die beiden Schalter 18 und 21 sind dabei so geschaltet, daß der Stromkreis des Ventilators 20 über den Schalter 21 nur dann geschlossen ist, wenn gleichzeitig auch der den Verdichter 15 des Kälteaggregats steuernde Schalter 18 geschlossen ist.

Aus den in den Diagrammen nach den Figuren 2 und 3 in Form von sogenannten "Kühlschrank-Kennlinien" dargestellten Kurvenabschnitten läßt sich der Temperaturverlauf im Gefrierfach "TV" und im Normalkühlfach (TM) eines Einkreis-Zweitemperaturen-Kühlschrankes in Abhängigkeit von der Raumtemperatur und der dadurch beeinflußten relativen Einschaltdauer (RED) seines Kühlaggregates erkennen. Unter dem Begriff der "relativen Einschaltdauer" ist dabei das in Prozent ausgedrückte Verhältnis der Einschaltdauer des Verdichters der Kühlmaschine zu dessen Stillstandszeiten zu verstehen, welches mit zunehmender Raumtemperatur größer wird.

Im unteren Abschnitt der einmal bei einer Raumtemperatur von + 16°C (Fig. 2) und einmal bei einer Raumtemperatur von + 32°C (Fig. 3) aufgenommenen Diagrammen ist dabei jeweils die relative Einschaltdauer des Verdichters (RED) über der mittleren Temperatur (TM) im Normalkühlfach aufgetragen, während darüber der hiervon abhängige Temperaturverlauf (TV) im Gefrierfach aufgetragen ist.

Hierbei beschreiben die mit A bezeichneten, voll ausgezogenen Kurven die Kühlschrank-Kennlinien den Normalzustand, also mit üblicher, freier Konvektion. Ein die Luft im Kühlfach umwälzender Ventilator erhöht dort die Kälteleistung, weil der Wärmeübergang durch die Erhöhung der Wärmeübergangszahl gesteigert wird. Es gilt

$$Q = \alpha \times A \times \Delta T$$

wobei unter Q die übertragene Kälteleistung in W, mit $\alpha$ die Wärmeübergangszahl in W/m$^2$K, A die Verdampferfläche in m$^2$ und unter $\Delta$ T die Temperaturdifferenz in K zu verstehen ist. Unter Verwendung des Ventilators im Normalkühlfach ergeben sich somit die mit B bezeichneten, gestrichelt eingezeichneten Kurven. Es ist dabei zu erkennen, daß die Erhöhung des Wärmeübergangs zu einer kleineren Temperaturdifferenz zwischen der Lufttemperatur im Normalkühlfach und dessen Verdampferoberfläche führt. Dies hat zur Folge, daß die Lufttemperatur entsprechend der Änderung von 1 nach 2 kälter wird. Ferner ergibt sich daraus, daß bei konstanter Temperatur im Normalkühlfach die relative Einschaltdauer des Verdichters (RED) kleiner und die Temperatur im Tiefkühlfach entsprechend der Differenz von 1 nach 3 wärmer wird.

Es ergibt sich daraus, daß der Einsatz eines Ventilators im Normalkühlfach zur Leistungssteigerung und zur Vermeidung von innerer Betauung bei hohen Umgebungstemperaturen und hoher Luftfeuchtigkeit beiträgt. Nicht benötigt oder sogar nachteilig ist somit die Einschaltung des Ventilators bei niedriger Umgebungstemperatur, da die abhängige Temperatur im Gefrierfach unter Umständen über die zulässige Grenze ansteigt. Aus diesem Grunde ist es sinnvoll, den Ventilator im Innern des Normalkühlfaches - wie mit der hier vorliegenden Erfindung vorgeschlagen - über den Thermostaten 22 zu schalten, der den Ventilator in Abhängigkeit von der Temperatur der das Gerät umgebenden Raumluft steuert. Um eine sich dann durch die Erhöhung der Wärmeübergangszahl am Verdampfer ergebende unerwünschte Temperaturabsenkung im Normalkühlfach zu vermeiden, wird der Verdichter 15 über den Regler 19 abgeschaltet, sobald an dem die Lufttemperatur im Normalkühlfach erfassenden Fühler eine dem unteren Schaltpunkt entsprechende Lufttemperatur erreicht ist. Somit schaltet der Regler 19 den Verdichter der Kältemaschine in Abhängigkeit von der Lufttemperatur im Normalkühlfach ab und über die Temperatur der Verdampferoberfläche im Normalkühlfach zu.

Bei hoher Umgebungstemperatur und hoher Luftfeuchte wird mit Hilfe des durch den Ventilator erzwungenen Luftstromes im Normalkühlfach 11 ein großer Teil der beim Öffnen der Tür 13 mit der aus der das Gerät umgebenden Atmosphäre dort eindringenden Feuchtigkeit zum Verdampfer transportiert und dort gezielt als Reif abgelagert. Der sich dabei vorübergehend auf dem kalten Kühlgut und kalten Teilen im Innern des Normalkühlfaches niederschlagende restliche Anteil der Luftfeuchte wird in kurzer Zeit durch den dann herrschenden Luftstrom aufgenommen und ebenfalls zum Verdampfer transportiert, von dem der dort entstandene Reifansatz während der Stehzeiten des Aggregats vollständig abtaut.

## Patentansprüche

1. Kühlgerät, insbesondere Mehrtemperaturen-Kühlschrank mit einer Einkreis-Kältemaschine, deren hintereinander geschaltete Verdampfer einem Gefrierfach (12) und wenigstens einem Kühlfach (11) mit einem temperaturabhängig die Luft im Kühlfach (11) umwälzenden Ventilator (20) zugeordnet sind und deren Regler (19) die Kältemaschine in Abhängigkeit von der Verdampfertemperatur im Kühlfach (11) periodisch derart steuert, daß vor jedem Wiederanlauf der Kältemaschine ein Abtauen des Verdampfers im Kühlfach (11) erfolgt, wobei der Regler (19) zusätzlich mit einem die Lufttemperatur im Kühlfach (11) erfassenden Fühler (19'') ausgestattet ist, mit dessen Hilfe er beim Erreichen des unteren Schaltpunktes im Kühlfach (11) die Kältemaschine (15) abschaltet, **dadurch gekennzeichnet,** daß ein auf die direkt durch einen Thermostat (22) gemessene Umgebungstemperatur des Gerätes reagierender Schalter (21) den Ventilator (20) nur bei über der normalen Raumtemperatur, z. B. 20°C, liegenden Umgebungstemperatur einschaltet.

2. Kühlgerät nach Anspruch 1, **dadurch gekennzeichnet,** daß der Stromkreis des Ventilators (20) nur bei eingeschaltetem Verdichter der Kältemaschine (15) geschlossen werden kann.

3. Kühlgerät nach Anspruch 2, **dadurch gekennzeichnet,** daß der Ventilator (20) zusätzlich mit einem Zeitverzögerungsschalter vergehen ist, mit dessen Hilfe seine Laufzeiten gegenüber den Laufperioden der Kältemaschine versetzt sind.

## Claims

1. Refrigeration apparatus, in particular a multi-temperature refrigerator cabinet, with a single-circuit refrigerating machine, the evaporators of which are connected one behind the other and associated with a freezing compartment (12) and at least one cooling compartment (11) with a fan (20) circulating the air in the cooling compartment (11) in dependence on the temperature and the regulator (19) of which periodically controls the refrigerating machine in dependence on the evaporator temperature in the cooling compartment (11) in such a manner that a defrosting of the evaporator in the cooling compartment (11) takes place before each restarting of the refrigerating machine, wherein the regulator (19) is additionally equipped with a sensor (19'') which detects the air temperature in the cooling compartment (11) and with the aid of which it switches off the refrigerating machine (15) on reaching the lower switching point in the cooling compartment (11), characterised in that a switch (21), which reacts to the ambient temperature of the apparatus measured directly by a thermostat (22), switches on the fan (20) only when the ambient temperature lies above the normal room temperature, for example 20°C.

2. Refrigerator apparatus according to claim 1, characterised in that the current circuit of the fan (20) can be closed only when the compressor of the refrigerating machine (15) is switched on.

3. Refrigerator apparatus according to claim 2, characterised in that the fan (20) is additionally provided with a time delay switch, with the aid of which its running times are displaced relative to the running periods of the refrigerating machine.

**Revendications**

1. Appareil frigorifique, en particulier réfrigérateur à plusieurs températures comprenant une machine frigorifique à circuit unique, dont les évaporateurs montés en série sont associés à un compartiment congélateur (12) et à au moins un compartiment frigorifique (11) avec un ventilateur (20) soufflant de l'air de manière variable en fonction de la température dans le compartiment frigorifique (11) et dont le mécanisme régulateur (19) commande périodiquement la machine frigorifique en fonction de la température d'évaporation dans le compartiment frigorifique (11) de manière telle qu'avant chaque redémarrage de la machine frigorifique, un dégivrage de l'évaporateur se produit dans le compartiment frigorifique (11), le mécanisme régulateur (19) étant équipé en plus d'un détecteur (19'') prenant la température de l'air dans le compartiment frigorifique (11) à l'aide duquel il déconnecte la machine frigorifique (15) lorsque le point inférieur d'enclenchement est atteint dans le compartiment frigorifique (11), caractérisé en ce qu'un commutateur (21) réagissant à la température environnante de l'appareil mesurée directement par un thermostat (22) connecte le ventilateur (20) uniquement lorsque la température environnante se situe au-dessus de la température ambiante normale, par exemple 20°C.

2. Appareil frigorifique selon la revendication 1, caractérisé en ce que le circuit du ventilateur (20) ne peut être fermé que lorsque le compresseur de la machine frigorifique (15) est connecté.

3. Appareil frigorifique selon la revendication 2, caractérisé en ce que le ventilateur (20) est doté en plus d'un commutateur de temporisation, à l'aide duquel ses temps de fonctionnement sont décalés par rapport aux périodes de fonctionnement de la machine frigorifique.

# Fig.1

# Fig.2

# Fig.3